Europäisches Patentamt

European Patent Office

Office européen des brevets

(19)

(11) Publication number: **0 023 743**
**B1**

(12) **EUROPEAN PATENT SPECIFICATION**

(45) Date of publication of patent specification: **20.10.82**

(51) Int. Cl.³: **H 01 S 3/03**

(21) Application number: **80200709.6**

(22) Date of filing: **21.07.80**

(54) Gas discharge laser.

(30) Priority: **03.08.79 NL 7905969**

(43) Date of publication of application:
**11.02.81 Bulletin 81/6**

(45) Publication of the grant of the patent:
**20.10.82 Bulletin 82/42**

(84) Designated Contracting States:
**BE DE FR GB NL**

(56) References cited:
**DE - B - 2 754 756**
**GB - A - 2 037 065**
**US - A - 3 930 824**

**NEUES AUS DER TECHNIK, no. 3, 1st June
1977,
Wüerzburg, DE.
"Gasentladungslaser mit längerer
Lebensdauer", page 3, abstract no. 409
"Gasentladungslaser mit nachträglich einstell-
barem Spiegel", page 3, abstract no. 408**

(73) Proprietor: **N.V. Philips' Gloeilampenfabrieken**
**Groenewoudseweg 1**
**NL-5621 BA Eindhoven (NL)**

(72) Inventor: **Van den Brink, Hans Gerard**
**c/o INT. OCTROOIBUREAU B.V. Prof. Holstlaan 6**
**NL-5656 AA Eindhoven (NL)**
Inventor: **Lamboo, Theodorus Franciscus**
**c/o INT. OCTROOIBUREAU B.V. Prof. Holstlaan 6**
**NL-5656 AA Eindhoven (NL)**

(74) Representative: **Duys, Andréas Maria Wilhelmus**
**et al,**
**INTERNATIONAAL OCTROOIBUREAU B.V. Prof.**
**Holstlaan 6**
**NL-5656 AA Eindhoven (NL)**

Courier Press, Leamington Spa, England.

Gas discharge laser

The invention relates to a gas discharge comprising a cylindrical glass discharge vessel of which at least one end is sealed by means of a metal cap, said cap supporting a reflector body, on the laser optical axis, and a metal exhaust tube being connected eccentrically to the cap.

Such a gas discharge laser is disclosed in German published Patent Application 27 54 756. Such gas discharge lasers have a wide field of application, for example, for aligning constructions, in control systems, devices for measuring distances, copying machines, measuring devices for measuring air and water pollution, and in particular in apparatus for reading optical record carriers, for example, in a video disc player for displaying information from video discs on a television set.

For a large number of these applications a high degree of direction stability of the generated laser beam is necessary. In the said German Patent Application 27 54 756 fairly good direction stability of the generated laser beam is obtained by connecting a compensating tubular element to said metal cap symmetrically radially opposite to the exhaust tube. The metal cap has a convex shape and is connected to the glass of the discharge vessel by means of a so-called "drop-seal". (In a "drop seal" the glass during the sealing is buckled). The exhaust tube forms an asymmetrical thermal load for the metal cap as a result of which the convex metal cap will tend to deform upon heating after the laser has been put into operation, so that the reflector body tends to tilt. The compensating tubular element compensates for such deformation of the metal cap. It will be obvious that such a solution is laborious and expensive because an element has to be added to the construction which has to be connected to the cap at a position accurately symmetrically radially opposite to the metal exhaust tube. Moreover, small differences in dimensions and mass between the exhaust tube and the compensating element will still give rise to some deformation.

It is therefore an object of the invention to obtain better direction stability of the generated laser beam without needing to add an element to the construction.

According to the invention, a gas discharge laser as set forth in the opening paragraph is characterized in that a major portion of the metal caps has substantially the shape of a truncated cone, the reflector body being supported perpendicular to the axis of the truncated cone adjacent the narrower end thereof and the metal exhaust being connected to the conical surface. The conical surface preferably adjoins, at its wide end, a cylindrical skirt which surrounds the end of the glass discharge vessel. This skirt gives extra rigidity to the glass-to- metal connection (using a butt-seal) of the cap to the glass wall of the discharge vessel. Why the direction stability of the laser beam is better with a cap of which at least a major portion has the shape of a truncated cone is not quite clear. It is believed that the linearity of the conical surface in an axial direction results in axial rigidity. This rigidity makes the cap considerably less sensitive to the provision of an opening where the exhaust tube, which usually consists of a material having a different coefficient of expansion, is connected.

A cap having the shape of a truncated cone the apical angle of which was approximately 150° gave particularly good results.

An embodiment of the invention will now be described by way of example, with reference to the accompanying diagrammatic drawing which is a longitudinal sectional view of  He-Ne gas discharge laser embodying the invention. This laser consists of a cylindrical discharge vessel 1 of glass which is sealed at each end by metal caps 2 and 3 respectively which are each connected to the glass by means of a so-called "butt seal" and which are provided with central apertures 4 and 5 at which reflector members 6 and 7 are connected. Each reflector member consists of a tubular part 8 which is secured in the apertures 4 and 5 respectively, a reflector holder 9, and a multi-layer reflector 10. An exhaust tube 11, which after filling the gas discharge layer is pinched and/or soldered, is secured to the cap 3. Cap 3 has a major portion substantially in the shape of a truncated cone having at its narrower end a surface portion 12 perpendicular to the axis of the cone and a conical surface portion 13, and also has a skirt portion 14. In caps without a skirt 14, the connection to the glass discharge vessel may be made by means of a "drop seal". In accordance with the invention, the exhaust tube 11 should be connected to the conical surface of the truncated cone. Influencing of the angular position of the reflector member 7 in operation then hardly occurs and good direction stability of the laser beam is obtained. The reflectors 10 together with a laser capillary 15 constitute the laser resonator. Furthermore a cylindrical cathode 16 extends coaxially in the discharge vessel. In order to obtain polarized light from the laser, a Brewster window 18 is provided near the reflector number 7 in a holder 17 (for example, as described in Netherlands patent application 7901 068).

Until now, glass exhaust tubes have sometimes been provided in the cylindrical glass wall of the discharge vessel. However, for series production, metal exhaust tubes provided in a manner in accordance with the invention are much more attractive because they are simpler to manufacture and are suitable for automated production.

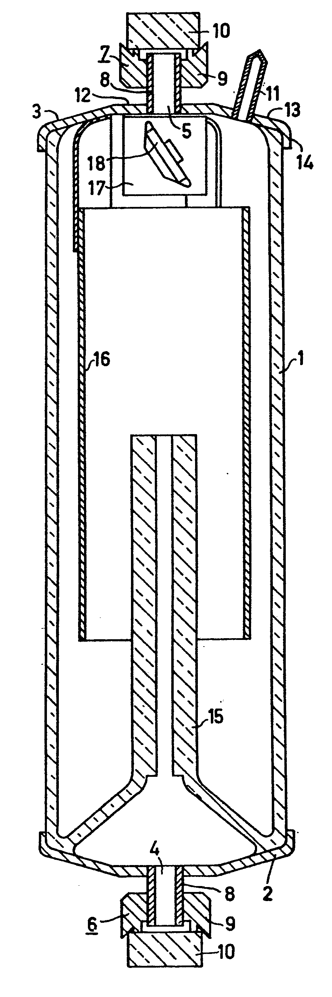

The He-Ne laser shown in the Figure is approximately 25 cm long and has a diameter of approximately 30 mm. The metal caps are 1 mm thick and consist of a deep drawn metal which adheres to glass. Good adhesion to a hard glass is provided by caps of, for example, fernico. Caps of, for example, Dilvero or Nilo 475 (a Cr-Fe allloy and a Cr-Ni-Fe alloy, respectively, trade names of Metalimphy, Paris, France) readily adhere to soft glasses. The apical angle of the truncated cone is 150° so that the conical surface 13 makes an angle of 75° with the axis of the laser. The diameter of the apical surface 12 is 12 mm. The collar 14 has an inside height of 1.5 mm. The metal exhaust tube 11 has a diameter of 4 mm.

## Claims

1. A gas discharge laser comprising a cylindrical glass discharge vessel of which at least one end is sealed by means of a metal cap, said cap supporting a reflector body on the laser optical axis, and a metal exhaust tube being connected eccentrically to the cap, characterized in that a major portion of the metal cap has substantially the shape of a truncated cone, the reflector body being supported perpendicular to the axis of the truncated cone adjacent the narrower end thereof and the metal exhaust tube being connected to the conical surface.

2. A gas discharge laser as claimed in Claim 1, characterized in that the conical surface at its wider end adjoins a cylindrical skirt which surrounds said end of the cylindrical vessel.

3. A gas discharge laser as claimed in Claim 1 or 2, characterized in that the apical angle of the cone is approximately 150°.

4. A gas discharge laser as claimed in Claim 1, 2 or 3, characterized in that the diameter of the discharge vessel is approximately 30 mm and the diameter of the surface of the cone perpendicular to the axis thereof is approximately 12 mm.

## Revendications

1. Laser à décharge dans un gaz, comportant une enceinte à décharge cylindrique en verre, dont au moins une extrémité est fermée à l'aide d'un capot métallique, ledit capot supportant un corps réflecteur sur l'axe optique du laser, et un queusot métallique étant fixé de façon excentrique au capot, caractérisé en ce que le capot métallique présente en majeure partie la forme d'un cône tronqué, le corps réflecteur étant supporté perpendiculairement à l'axe du cône tronqué près de l'extrémité étroite de ce dernier et le queusot métallique étant fixé à la surface conique.

2. Laser à décharge dans le gaz selon la revendication 1, caractérisé en ce qu'à son extrémité plus large, la surface conique se raccorde à un col cylindrique, qui entoure ladite extrémité de l'enceinte cylindrique.

3. Laser à décharge dans le gaz selon la revendication 1 ou 2, caractérisé en ce que l'angle au sommet du corps est d'environ 150°.

4. Laser à décharge dans le gaz selon la revendication 1, 2 ou 3, caractérisé en ce que le diamètre de l'enceinte à décharge est d'environ 30 mm et le diamètre del a surface du cône perpendiculaire à son axe est d'environ 12 mm.

## Patentansprüche

1. Gasentladungslaser mit einem zylindrischen Entladungs-Glasgefäss, dessen zumindest eines Ende mit Hilfe einer Metallkappe abgedichtet ist, die auf der optischen Laserachse einen Reflektorkörper trägt, und mit einem exzentrisch auf der Kappe befestigten Pumprohr aus Metall, dadurch gekennzeichnet, dass der grössere Teil der Metallkappe im wesentlichen die Form eines stumpfen Kegels aufweist, wobei der Reflektorkörper senkrecht zur Achse des Stumpfkegels in der Nähe seines schmaleren Endes angeordnet und das Pumprohr aus Metall auf der kegelförmigen Oberfläche befestigt ist.

2. Gasentladungslaser nach Anspruch 1, dadurch gekennzeichnet, dass die kegelförmige Oberfläche am breiteren Ende einen zylindrischen Kragen aufweist, der das erwähnte Ende des zylindrischen Gefässes umgibt.

3. Gasentladungslaser nach Anspruch 1 oder 2, dadurch gekennzeichnet, dass der Scheitelwinkel des Kegels etwa 150° beträgt.

4. Gasentladungslaser nach Anspruch 1, 2 oder 3, dadurch gekennzeichnet, dass der Durchmesser des Entladungsgefässes etwa 30 mm und der Durchmesser der Oberfläche des Kegels senkrecht zu seiner Achse etwa 12 mm betragen.